# EUROPEAN PATENT SPECIFICATION

(11) **EP 1 187 441 B1**
(45) Date of publication and mention of the grant of the patent: **15.04.2009**
(21) Application number: 01307422.4
(22) Date of filing: 31.08.2001
(51) Int. Cl.: H04M 3/493, G10L 15/18, H04M 3/42

(54) **Audio recognition method and device for sequence of numbers**
Verfahren und Vorrichtung zur Audioerkennung von einer Zahlenfolge
Méthode et appareil pour la reconnaissance audio d'une séquence de numéros

(30) Priority: 31.08.2000 JP 2000264127
(43) Date of publication of application: 13.03.2002
(73) Proprietor: Pioneer Corporation, Meguro-ku, Tokyo (JP)
(72) Inventor: Tamura, Fumio, c/o Pioneer Corporation, Kawagoe-shi, Saitama (JP)
(74) Representative: Haley, Stephen

(56) References cited:
- EP-A- 1 172 994
- WO-A-00/05710
- US-A- 5 995 926

## Description

The present invention relates to an audio recognition method and device for a sequence of numbers preferably employed for an audio recognition of a telephone number or a postal code in which a plurality of sets of numeric characters are connected together to have a proper meaning.

A telephone number dialing device or a telephone number search device by a voice has been put to practical use. However, the numeric characters are heretofore treated as a simply continuous sequence of numbers when they are recognized, and then, it is decided whether or not they constitute a suitable telephone number after the numeric character are completely inputted.

In this case, all numbers can be asserted by speaking once and a number inputting process can be advantageously rapidly carried out. However, area code numbers or the combinations of area code numbers and city code numbers which do not exist may be erroneously recognized.

A communication procedure between a system and a user is performed as described below.

Guidance message: "please speak a telephone number" Speaking: "0492851111"
Recognition result: "0492151111" (not exist)
Message: "number is not registered"

As another example, there has been also provided a device that a sequence of numbers is recognized by dividing it into a plurality of parts such as an area code number, a city code number and a subscriber's number in accordance with meaning. In this case, since an exclusively used recognition dictionary can be used for each separation, the numbers which do not exist are not obtained as the recognition result, however, a plurality of times of recognition processes need to be done so that much time and labor are required.

A communication procedure between the system and the user in this case is described below.

Guidance message: "please speak an area code number" Speaking: "0492"
Recognition result: "0492"
Guidance message: "please speak a city telephone" Speaking: "85"
Recognition result: "85"
Guidance message: "please speak the rest of numbers"
Speaking: "1111"
Recognition result: "1111"

In order to recognize all the numbers simultaneously and recognize only proper numbers, a waiting dictionary including the combinations of all the numbers needs to be prepared, which is actually impossible.

As described above, according to the conventional telephone number recognition devices by voice, although an input operation is not troublesome, illegal numbers are inconveniently received in the former. On the other hand, although the illegal numbers are not accepted, a telephone number need be divided into a plurality of parts and the divided parts inconveniently need be spoken in order with much time and labor in the latter.

US5995926A discloses a speech recognition system for performing voice dialing on a telephone. EP1172994A discloses speech recognition systems for identifying items stored in a database using two separate spoken words from a user which respectively relate to two different sets of words which are stored in the database wherein recognition of the spoken words takes into account knowledge of connections between words in the first set and words in the second set.

The present invention is made by considering the above mentioned circumstances. It is an object of the present invention to provide an audio recognition device and method for a sequence of numbers that a sequence of numbers having a plurality of regions separate in view of meaning is divided into a plurality of regions and voice recognition dictionaries divided respectively for the divided regions are connected together to continuously perform an audio recognition so that all numbers can be completely inputted by speaking once and illegal numbers are not accepted in area code numbers and city code numbers.

In a first aspect, the invention consists in an audio recognition apparatus recognizing, via voice, a sequence of numbers representing a telephone number made up of area code numbers, city code numbers, and subscriber's numbers in order, comprising:
an outputting means outputting a first message to urge the user to input the telephone number via user's voice;
an input means inputting an input of the user's voice; and
a voice recognition means for recognizing the sequence of numbers input by the user's voice in response to the first message;
characterised by a storage means for storing a recognition dictionary of the area code numbers; a recognition dictionary of the city code numbers; and a recognition dictionary of the subscriber's numbers;
the voice recognition means using the recognition dictionaries stored.in the storage means to recognise the numbers in the sequence;
means adapted to set the storage means so that it contains only the recognition dictionary of the city code numbers and the recognition dictionary of the subscriber's numbers, to output via the outputting means a second message to urge the user to input the part of the telephone number representing the city code numbers and the subscriber's numbers in order,via the user's voice, and to recognise via the voice recognition means the sequence of numbers input by the user's voice in response to the second message using the recognition dictionaries stored in the storage means when only the area code numbers in the number sequence are recognized from the user's voice in response to the first message,
means adapted to set the storage means so that it contains only the recognition dictionary of the subscriber's numbers, to output via the outputting means a third message to urge the user to input the subscriber's number part of the telephone number via the user's voice, and to recognise via the voice recognition means the sequence of numbers input by the user's voice in response to the third message using the recognition dictionary of the subscriber's numbers stored in the storage means when only the area code numbers and the city code numbers are recognized from the user's voice in response to the first message, and
means adapted to complete the voice recognition processing by notifying of a recognition result when the area code numbers, city code numbers, and subscriber's numbers are recognized from the user's voice in response to the first message.

In a second aspect, the invention consists in an audio recognition method for recognizing, via voice, a sequence of numbers representing a telephone number made up of area code numbers, city code numbers, and subscriber's numbers in order, the method comprising the steps of:
outputting a first message to urge the user to input the telephone number via user's voice;
inputting an input of the user's voice; and
recognizing the sequence of numbers input by the user's voice in response to the first message;
storing in a storage means a recognition dictionary of the area code numbers; a recognition dictionary of the city code numbers; and a recognition dictionary of the subscriber's numbers; and
using the recognition dictionaries stored in the storage means to recognise the numbers in the sequence;
wherein when only the area code numbers in the number sequence are recognized from the user's voice in response to the first message, the storage means is set so that it contains only the recognition dictionary of the city code numbers and the recognition dictionary of the subscriber's numbers, a second message is output to urge the user to input the part of the telephone number representing the city code numbers and the subscriber's numbers in order via the user's voice, and the sequence of numbers input by the user's voice in response to the second message are recognized using the recognition dictionaries stored in the storage means; and
when only the area code numbers and the city code numbers are recognized from the user's voice in response to the first message, the storage means is set so that it contains only the recognition dictionary of the subscriber's numbers, a third message is output to urge the user to input the subscriber's number part of the telephone number via the user's voice, and the sequence of numbers input by the user's voice in response to the third message are recognized using the recognition dictionary of the subscriber's numbers stored in the storage means, and
when the area code numbers, city code numbers, and subscriber's numbers are recognized from the user's voice in response to the first message, the voice recognition processing is completed by notifying of a recognition result.

Here, the sequence of numbers designates, for instance, a telephone number composed of 10 digits. The sequence of numbers comprises regions separate in meaning such as a area code number region, a city code number region and a subscriber's number region. These regions different in view of meaning are connected together to form one telephone number.

According to the above described constitution, since the recognition of a telephone number is carried out by limiting it only to existing area code numbers and existing city code numbers, illegal area code numbers and city code numbers are not erroneously recognized so that a recognition rate is improved. Further, the telephone number can be completely inputted by speaking once, and accordingly, the telephone number can be efficiently inputted.

In the Drawings;
Fig. 1 is a block diagrams showing an embodiment of an audio recognition method and device for a sequence of numbers according to the present invention.
Fig. 2 is a diagram showing one example of a recognition dictionary stored in a recognition dictionary memory shown in Fig. 1.
Fig. 3 is a diagram showing one example of a recognition dictionary stored in the recognition dictionary memory shown in Fig. 1.
Fig. 4 is a diagram showing one example of a recognition dictionary stored the recognition dictionary memory shown in Fig. 1.
Fig. 5 is a diagram showing one example of a recognition dictionary stored in the recognition dictionary memory shown in Fig. 1.
Fig. 6 is a diagram showing one example of a city code number ID table stored in a area-city number combination memory shown in Fig. 1.
Fig. 7 is a diagram showing one example of a network construction for continuously recognizing a plurality of recognition dictionaries transferred to a recognition dictionary storing section shown in Fig. 1.
Fig. 8 is a diagram showing one example of a network construction for continuously recognizing a plurality of recognition dictionaries transferred to the recognition dictionary storing section shown in Fig. 1.
Fig. 9 is a diagram showing one example of a network construction for recognizing a recognition dictionary transferred to the recognition dictionary storing section shown in Fig. 1.
Fig. 10 is a flowchart referred to for explaining the operation of the embodiment of the present invention.
Fig. 11 is a flowchart referred to for explaining the operation of the embodiment of the present invention.

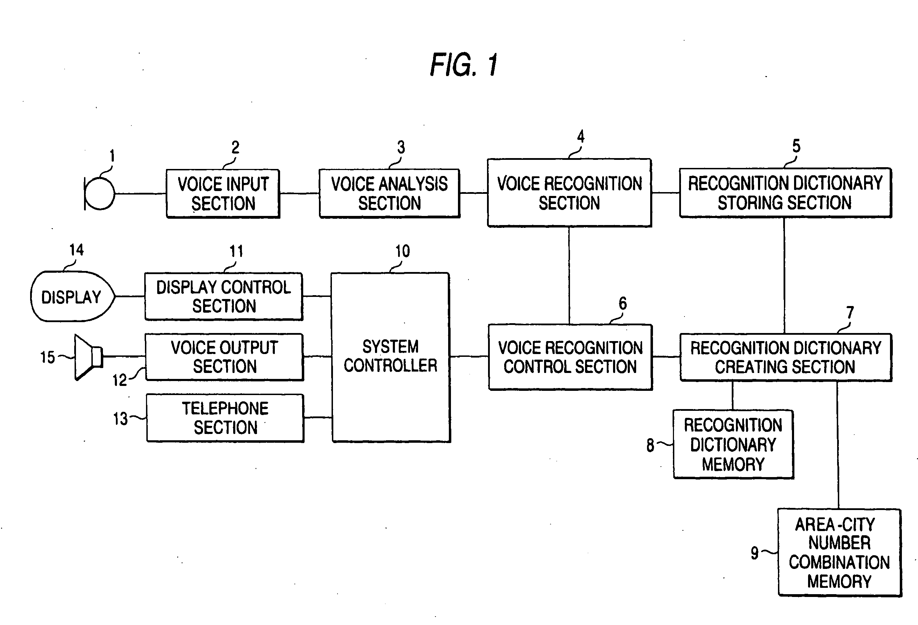

Fig. 1 is a block diagram showing an embodiment of an audio recognition device for a sequence of numbers according to the present invention. In Fig. 1, a reference numeral 1 denotes a microphone for converting the voice of a user into an electric signal. A reference numeral 2 denotes a voice input section for amplifying the voice converted to the electric signal to a desired level. A reference numeral 3 designates a voice analysis section for analyzing an inputted audio signal and for generating audio feature parameters. A reference numeral 5 denotes a recognition dictionary storing section in which word parameters to be subjected to a matching process in a voice recognition are stored. A reference numeral 4 denotes a voice recognition section for carrying out a voice recognition by computing the similarity between the audio feature parameters analyzed in the voice analysis section 3 and the word parameters stored in the recognition dictionary storing section 5.

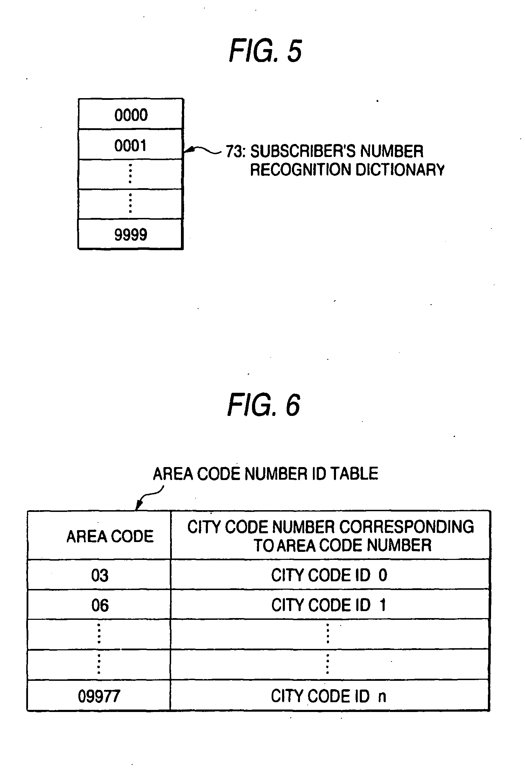

A recognized result of a voice uttered by the user is supplied to a voice recognition control section 6 as a recognized word. The voice recognition control section 6 changes the structure of the voice recognition dictionary of the recognition dictionary storing section 5 and transmits a final recognition result of a sequence of numbers to a system controller 10. A recognition dictionary creating section 7 takes out a required recognition dictionary from a recognition dictionary memory 8 in accordance with an instruction from the voice recognition control section 6 and transfers the required recognition dictionary to the recognition dictionary storing section 5 as the recognition dictionary. The system controller 10 performs the display of a recognition result to a display 14 through a display control section 11, the input of a voice and a telephone transmitting process to a telephone section 13, or the like on the basis of the voice recognition result obtained from the voice recognition control section 6. Reference numeral 9 denotes a area-city number combination memory in which a area code number ID table for storing the associated information of a area code number and a city code number ID is stored and the details thereof will be described by referring to Fig. 6.

Reference numeral 12 denotes a voice output section for outputting the above described guidance messages or the recognition results by voice and the voice output section serves to output a necessary voice messages in accordance with the instruction of the system controller 10.

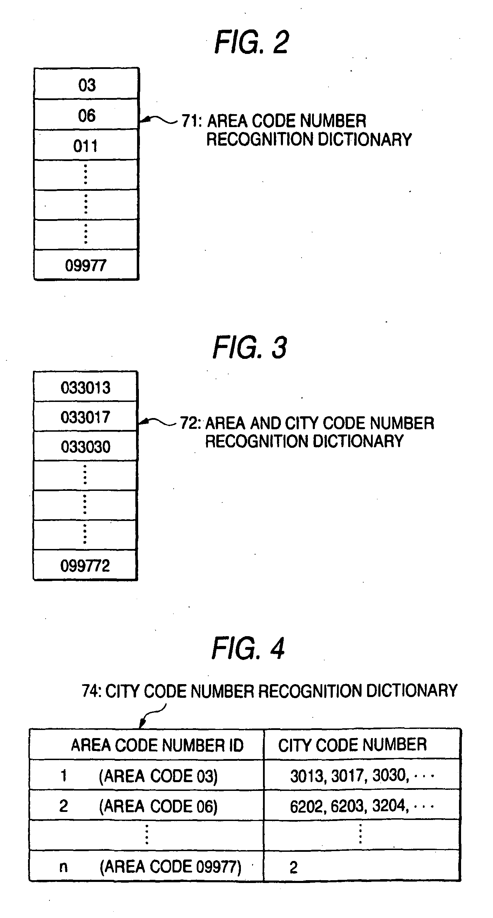

Figs. 2 to 6 show recognition dictionaries stored in the recognition dictionary memory 8. A area number recognition dictionary 71 shown in Fig. 2 is a recognition dictionary composed of all existing area code numbers. A area and city code number recognition dictionary 72 shown in Fig. 3 is a recognition dictionary including the combined numbers of area code numbers and city code numbers corresponding thereto. A city code number recognition dictionary shown in Fig. 4 is a dictionary that each entry is composed only of city code numbers corresponding to area code numbers, so that city code number data can be obtained by designating a area code number ID. A subscriber number recognition dictionary 73 shown in Fig. 5 is a dictionary for recognizing four digit numeric characters ranging from "0000" to "9999".

Fig. 6 is a area code number ID table for storing the associated information of the area code numbers and city code number Ids. The area code number ID table is stored in the area-city number combination memory 9.

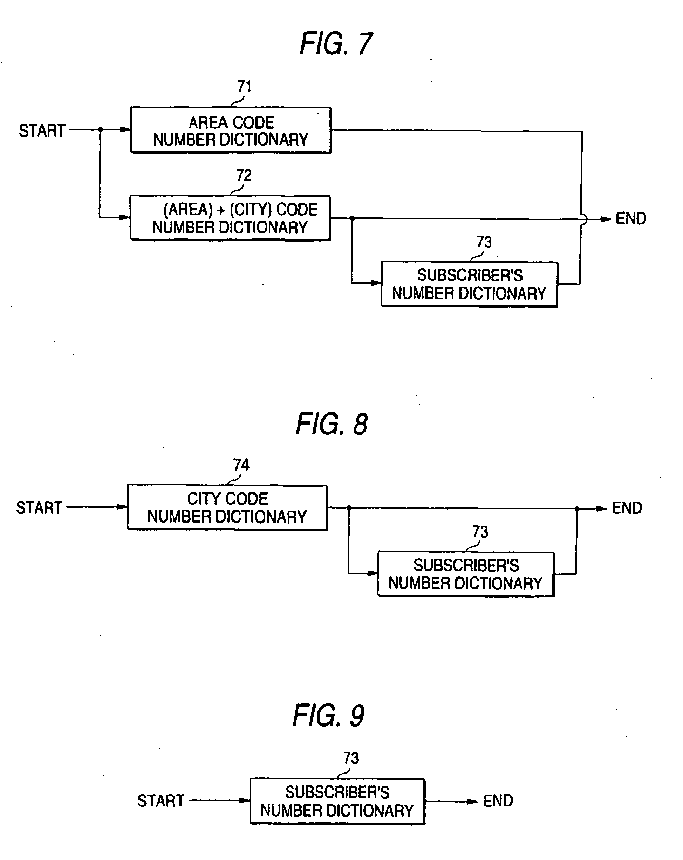

Figs. 7 to 9 show a network construction for continuous recognition, using a plurality of recognition dictionaries transferred to the recognition dictionary storing section 5.

In the network construction shown in Fig. 7, the speech patterns of a area code number; a area code number and a city code number; and a area code number, a city code number and a subscriber's number can be received. When only the area code number is pronounced, a route from a start to an end via the area code number recognition dictionary 71 is traced to determine a area code number. When the area and city code numbers are pronounced, a route from the start to the end via the area and city code number recognition dictionary 72 is traced to determine the area + city code number. When the area code number, the city code number and the subscriber's number are pronounced, a route from the start to the end via the area and city code number recognition dictionary 72 and the subscriber number recognition dictionary 73 is traced to determine the area + city + number.

In the network construction illustrated in Fig. 8, the speech patterns of the city code number, and the city code number and the subscriber's number can be received. When only the city code number is pronounced, a route from a start to an end via a city code number recognition dictionary 74, explained later, is traced to determine the city code number. When the city code number and the subscriber's number are pronounced, a route from the start to the end via the recognition dictionary 74 and the subscriber number recognition dictionary 73 is traced to determine the city + subscriber's number. In the network construction shown in Fig. 9, only the speech pattern of the subscriber number can be recorded. When only the subscriber's number is pronounced, only the subscriber's number recognition dictionary 73 is traced.

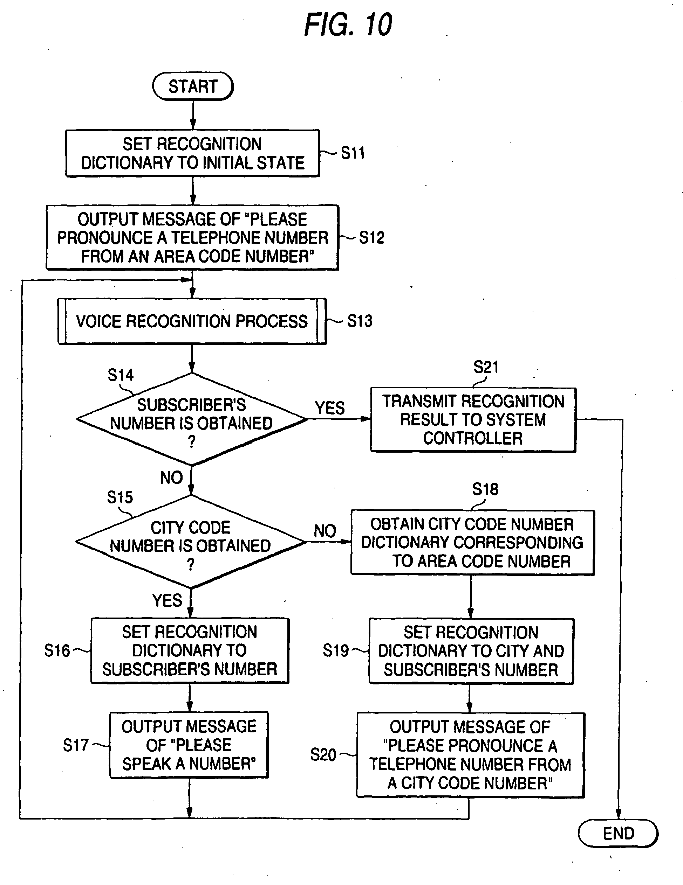

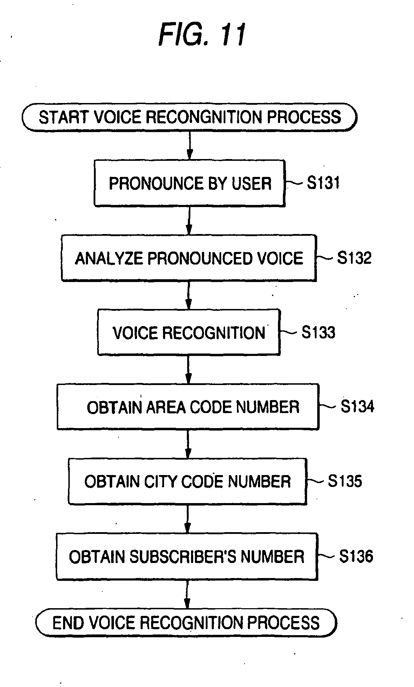

Now, in accordance with flowcharts shown in Figs. 10 and 11, the operation of the embodiment of the present invention shown in Figs. 1 to 9 will be described in detail.

Initially, referring to the flowchart shown in Fig. 10, a telephone number recognition processing will be described. When the telephone number recognition processing is started, the respective recognition dictionaries (71 to 73) including the area code number dictionary, the area + city code number dictionary and the subscriber's number are transferred to the recognition dictionary storing section 5 from the recognition dictionary memory 8 in step S11 to form the network construction of the recognition dictionaries, as shown in Fig. 7. When the setting process of the recognition dictionaries is completed, a guidance message of "please pronounce a telephone number from a area code number" is outputted to urge a user to pronounce the telephone number in step S12. Then, a voice is recognized in step S13.

Subsequently, it is judged whether or not the recognition result up to the subscriber's number is got in step S14. In the embodiment of the present invention, it can be judged that all numbers are got when the subscriber's number is obtained, because the area, city and subscriber's numbers are recognized in order, or recognized at the same time. When the recognition result up to the subscriber's number is obtained, the system controller 10 is informed of the recognition result as the recognition results of all the obtained sequences of telephone numbers. The controller 10 finishes the telephone number recognition process. When the recognition result up to the subscriber's number is not obtained, step S15 is executed in order to get numbers of insufficient parts.

In the step S15, when the city code number is obtained, which means both the area and city code numbers are correctly recognized, the step S15 of the procedure moves to step S16, since only the subscriber's number may need to be got. On the other hand, when the city code number is not obtained in the step S15, which means only the area number is correctly recognized, the procedure moves to a process of step S18 for obtaining the city code number and the subscriber's number. In the step S16, the dictionary network of the recognition dictionary storing section 5 is changed to a form shown in Fig. 9 so that only the subscriber's number can be recognized. Then, in the step S16, after a guidance message of "please speak a number" is outputted, the process of the procedure shifts to the recognition process in the step S13.

To obtain the city code number and the subscriber's number are obtained. In the step S18, the area code number ID table shown in Fig. 6 is referred to transfer a city code number dictionary 74, corresponding to the obtained and recognized area code number, to the recognition dictionary storing section 5. In step S19, the dictionary network of the recognition dictionary storing section 5 is changed to a form shown in Fig. 8 so as to recognize the city code number and the city code number and the subscriber's number. Then, in step S20, after a guidance message of "please pronounce a telephone number from a city code number" is outputted, the process of the procedure moves back to the recognition process of the step S13.

The recognition process is specifically illustrated in Fig. 11. Initially, in step 132, a pronounced voice (step S131) is analyzed to obtain an audio feature parameter. Then, the similarity between the analyzed audio feature parameter and all words in the recognition dictionaries stored in the recognition dictionary storing section 5 is obtained in step S133. The similarity is acquired by considering the above described network construction. Thus, the route having the highest similarity and the recognized word are got as the recognition result. In steps S134 to 136, the area code number, the city code number, and the subscriber's number are obtained from the recognition result.

In the embodiment of the present invention, although only telephone numbers are exemplified, it is to be understood that the invention may be applied to all of a plurality of sets of numeric characters which are connected to have meanings. For instance, the invention may be similarly applied to a postal code composed of a city and ward number of 3 digits and an area number of 4 digits.

As described above, according to the present invention, the voice recognition of a sequence of numbers having a plurality of regions separate in view of meaning is continuously carried out by connecting voice recognition dictionaries divided respectively so as to meet the plurality of regions of the sequence of numbers. Since the telephone number is recognized by limiting it to the existing area code numbers and the existing city code numbers, the illegal area and city code numbers are not erroneously recognized. Therefore, to improve the recognition rate is accomplished. Further, the telephone number can be completely inputted by pronouncing it once in a lump so that the telephone number can be efficiently inputted.

## Claims

1. An audio recognition apparatus adapted to recognise, via voice, a sequence of numbers representing a telephone number made up of area code numbers, city code numbers, and subscriber's numbers in order, comprising:
an outputting means (12, 15) outputting (S12) a first message to urge the user to input the telephone number via user's voice;
an input means (1, 2) inputting an input of the user's voice; and
a voice recognition means (4) for recognizing the sequence of numbers input by the user's voice in response to the first message;
**characterised by** a storage means (5) for storing a recognition dictionary (71) of the area code numbers; a recognition dictionary (74) of the city code numbers; and a recognition dictionary (73) of the subscriber's numbers; the voice recognition means using the recognition dictionaries stored in the storage means to recognise the numbers in the sequence;
means adapted to set (S19) the storage means so that it contains only the recognition dictionary of the city code numbers and the recognition dictionary of the subscriber's numbers, to output (S20) via the outputting means a second message to urge the user to input the part of the telephone number representing the city code numbers and the subscriber's numbers in order via the user's voice, and to recognise via the voice recognition means the sequence of numbers input by the user's voice in response to the second message using the recognition dictionaries stored in the storage means when only the area code numbers in the number sequence are recognized (S15: No) from the user's voice in response to the first message,
means adapted to set (S16) the storage means so that it contains only the recognition dictionary of the subscriber's numbers, to output (S17) via the outputting means a third message to urge the user to input the subscriber's number part of the telephone number via the user's voice, and to recognise via the voice recognition means the sequence of numbers input by the user's voice in response to the third message using the recognition dictionary of the subscriber's numbers stored in the storage means when only the area code numbers and the city code numbers are recognized (S15: Yes) from the user's voice in response to the first message, and
means adapted to complete the voice recognition processing by notifying (S21) of a recognition result when the area code numbers, city code numbers, and subscriber's numbers are recognized (S14: Yes) from the user's voice in response to the first message.

2. An audio recognition apparatus according to claim 1, further comprising:
means adapted to set (S16) the storage means so that it contains only the recognition dictionary of the subscriber's numbers, to output (S17) via the outputting means (12, 15) the third message, and to recognise via the voice recognition means (4) the sequence of numbers input by the user's voice in response to the third message using the dictionary of the subscriber's numbers stored in the storage means when the area code numbers and the city code numbers are recognized from the user's voice in response to the second message, and
means adapted to complete the voice recognition processing by notifying (S21) of the recognition result when the area code numbers, the city code numbers, and the subscriber's numbers in order are recognized (S14: Yes) from the user's voice in response to the second message.

3. An audio recognition apparatus according to claim 1 or claim 2, further comprising:
means adapted to complete the voice recognition processing by notifying (S21) of the recognition result when the area code numbers, the city code numbers, and the subscriber's numbers in order are recognized by the user's voice in response to the third message.

4. An audio recognition method for recognizing, via voice, a sequence of numbers representing a telephone number made up of area code numbers, city code numbers, and subscriber's numbers in order, the method comprising the steps of:
outputting (S12) a first message to urge the user to input the telephone number via user's voice;
inputting an input of the user's voice; and
recognizing the sequence of numbers input by the user's voice in response to the first message;
storing in a storage means (5) a recognition dictionary (71) of the area code numbers; a recognition dictionary (74) of the city code numbers; and a recognition dictionary (73) of the subscriber's numbers; and
using the recognition dictionaries stored in the storage means to recognise the numbers in the sequence;
wherein when only the area code numbers in the number sequence are recognized (S15: No) from the user's voice in response to the first message, the storage means is set (S19) so that it contains only the recognition dictionary of the city code numbers and the recognition dictionary of the subscriber's numbers, a second message is output (S20) to urge the user to input the part of the telephone number representing the city code numbers and the subscriber's numbers in order via the user's voice, and the sequence of numbers input by the user's voice in response to the second message are recognized using the recognition dictionaries stored in the storage means; and
when only the area code numbers and the city code numbers are recognized (S15: Yes) from the user's voice in response to the first message, the storage means is set (S16) so that it contains only the recognition dictionary of the subscriber's numbers, a third message is output (S17) to urge the user to input the subscriber's number part of the telephone number via the user's voice, and the sequence of numbers input by the user's voice in response to the third message are recognized using the recognition dictionary of the subscriber's numbers stored in the storage means, and
when the area code numbers, city code numbers, and subscriber's numbers are recognized (S14: Yes) from the user's voice in response to the first message, the voice recognition processing is completed by notifying (S21) of a recognition result.

5. An audio recognition method according to claim 4,
wherein:
when the area code numbers and the city code numbers are recognized from the user's voice in response to the second message, the storage means is set (S16) so that it contains only the recognition dictionary of the subscriber's numbers, the third message is output (S17), and the sequence of numbers input by the user's voice in response to the third message are recognized using the dictionary of the subscriber's numbers stored in the storage means, and
when the area code numbers, the city code numbers, and the subscriber's numbers in order are recognized (S14: Yes) from the user's voice in response to the second message, the voice recognition processing is completed by notifying (S21) of the recognition result.

6. An audio recognition method according to claim 4 or claim 5, wherein:
when the area code numbers, the city code numbers, and the subscriber's numbers in order are recognized by the user's voice in response to the third message, the voice recognition processing is completed by notifying (S21) of the recognition result.

## Patentansprüche

1. Audioerkennungsvorrichtung, die so eingerichtet ist, dass sie eine Folge von Zahlen, die eine Telefonnummer darstellen, die der Reihe nach aus Gebietskennzahlen, Ortskennzahlen und Teilnehmernummern besteht, über Spracheingabe erkennt, wobei die Vorrichtung umfasst:
eine Ausgabeeinrichtung (12, 15), die eine erste Nachricht ausgibt (S12), durch die der Benutzer veranlasst wird, die Telefonnummer mittels Sprache einzugeben;
eine Eingabeeinrichtung (1, 2), die eine Spracheingabe des Benutzers eingibt; und
eine Spracherkennungseinrichtung (4) zum Erkennen der Folge von Zahlen, die von dem Benutzer in Reaktion auf die erste Nachricht mittels Sprache eingegeben werden;
**gekennzeichnet durch** eine Speichereinrichtung (5) zum Speichern eines Erkennungswörterbuchs (71) der Gebietskennzahlen, eines Erkennungswörterbuchs (74) der Ortskennzahlen, und eines Erkennungswörterbuchs (73) der Teilnehmernummern,
wobei die Spracherkennungseinrichtung die in der Speichereinrichtung gespeicherten Erkennungswörterbücher verwendet, um die Zahlen in der Folge zu erkennen;
eine Einrichtung, die so eingerichtet ist, dass sie die Speichereinrichtung so einstellt, dass sie nur das Erkennungswörterbuch der Ortskennzahlen und das Erkennungswörterbuch der Teilnehmernummern enthält, über die Ausgabeeinrichtung eine zweite Nachricht ausgibt (S20), **durch** die der Benutzer veranlasst wird, den Teil der Telefonnummer, der der Reihe nach die Ortskennzahlen und die Teilnehmernummern darstellt, mittels Sprache einzugeben, und über die Spracherkennungseinrichtung die von dem Benutzer in Reaktion auf die zweite Nachricht mittels Sprache eingegebene Folge von Zahlen unter Verwendung der in der Speichereinrichtung gespeicherten Erkennungswörterbücher erkennt, wenn nur die Gebietskennzahlen in der Zahlenfolge aus der Spracheingabe des Benutzers in Reaktion auf die erste Nachricht erkannt werden (S15: Nein),
eine Einrichtung, die so eingerichtet ist, dass sie die Speichereinrichtung so einstellt (S16), dass sie nur das Erkennungswörterbuch der Teilnehmernummern enthält, über die Ausgabeeinrichtung eine dritte Nachricht ausgibt (S17), **durch** die der Benutzer veranlasst wird, den Teilnehmernummern-Teil der Telefonnummer mittels Sprache einzugeben, und über die Spracherkennungseinrichtung die von dem Benutzer in Reaktion auf die dritte Nachricht mittels Sprache eingegebene Folge von Nummern unter Verwendung des Erkennungswörterbuchs der Teilnehmernummern, das in der Speichereinrichtung gespeichert ist, erkennt, wenn nur die Gebietskennzahlen und die Ortskennzahlen aus der Spracheingabe des Benutzers in Reaktion auf die erste Nachricht erkannt werden (S15: Ja), und
eine Einrichtung, die so eingerichtet ist, dass sie die Spracherkennungsverarbeitung abschließt, indem sie ein Erkennungsergebnis mitteilt (S21), wenn die Gebietskennzahlen, die Ortskennzahlen und die Teilnehmernummern aus der Spracheingabe des Benutzers in Reaktion auf die erste Nachricht erkannt werden (S14: Ja).

2. Audioerkennungsvorrichtung nach Anspruch 1, die des Weiteren umfasst:
eine Einrichtung, die so eingerichtet ist, dass sie die Speichereinrichtung so einstellt (S16), dass sie nur das Erkennungswörterbuch der Teilnehmernummern enthält, über die Ausgabeeinrichtung (12, 15) die dritte Nachricht ausgibt (S17) und über die Spracherkennungseinrichtung (4) die in Reaktion auf die dritte Nachricht durch die von dem Benutzer mittels Sprache eingegebene Folge von Nummern unter Verwendung des in der Speichereinrichtung gespeicherten Wörterbuchs der Teilnehmernummern erkennt, wenn die Gebietskennzahlen und die Ortskennzahlen aus der Spracheingabe des Benutzers in Reaktion auf die zweite Nachricht erkannt werden, und
eine Einrichtung, die so eingerichtet ist, dass sie die Spracherkennungsverarbeitung abschließt, indem sie das Erkennungsergebnis mitteilt (S21), wenn die Gebietskennzahlen, die Ortskennzahlen und die Teilnehmernummern der Reihe nach aus der Spracheingabe des Benutzers in Reaktion auf die zweite Nachricht erkannt werden (S14: Ja).

3. Audioerkennungsvorrichtung nach Anspruch 1 oder Anspruch 2, die des Weiteren umfasst:
eine Einrichtung, die so eingerichtet ist, dass sie die Spracherkennungsverarbeitung abschließt, indem sie das Erkennungsergebnis mitteilt (S21), wenn die Gebietskennzahlen, die Ortskennzahlen und die Teilnehmernummern der Reihe nach durch die Spracheingabe des Benutzers in Reaktion auf die dritte Nachricht erkannt werden.

4. Audioerkennungsverfahren zum Erkennen einer Folge von Zahlen, die eine Telefonnummer darstellen, die der Reihe nach aus Gebietskennzahlen, Ortskennzahlen und Teilnehmernummern besteht, über Spracheeingabe, wobei das Verfahren die folgenden Schritte umfasst:
Ausgeben (S12) einer ersten Nachricht, durch die der Benutzer veranlasst wird, die Telefonnummer mittels Sprache einzugeben;
Eingeben einer Spracheingabe des Benutzers; und
Erkennen der Folge von Zahlen, die von dem Benutzer in Reaktion auf die erste Nachricht mittels Sprache eingegeben werden;
Speichern eines Erkennungswörterbuchs (71) der Gebietskennzahlen, eines Erkennungswörterbuchs (74) der Ortskennzahlen und eines Erkennungswörterbuchs (73) der Teilnehmernummern in einer Speichereinrichtung (5); und
Verwenden der in der Speichereinrichtung gespeicherten Erkennungswörterbücher, um die Zahlen in der Folge zu erkennen;
wobei, wenn nur die Gebietskennzahlen in der Zahlenfolge aus der Spracheingabe des Benutzers in Reaktion auf die erste Nachricht erkannt werden (S15: Nein), die Speichereinrichtung so eingestellt wird (S19), dass sie nur das Erkennungswörterbuch der Ortskennzahlen und das Erkennungswörterbuch der Teilnehmernummern enthält, eine zweite Nachricht ausgegeben wird (S20), durch die der Benutzer veranlasst wird, den Teil der Telefonnummer, der der Reihe nach die Ortskennzahlen und die Teilnehmernummern darstellt, mittels Sprache einzugeben, und die von dem Benutzer in Reaktion auf die zweite Nachricht mittels Sprache eingegebene Folge von Zahlen unter Verwendung der in der Speichereinrichtung gespeicherten Erkennungswörterbücher erkannt wird; und
wenn nur die Gebietskennzahlen und die Ortskennzahlen aus der Spracheingabe des Benutzers in Reaktion auf die erste Nachricht erkannt werden (S15: Ja), die Speichereinrichtung so eingestellt wird (S16), dass sie nur das Erkennungswörterbuch der Teilnehmernummern enthält, eine dritte Nachricht ausgegeben wird (S17), durch die der Benutzer veranlasst wird, den Teilnehmernummern-Teil der Telefonnummer mittels Sprache einzugeben, und die durch die Spracheingabe des Benutzers in Reaktion auf die dritte Nachricht eingegebene Folge von Zahlen unter Verwendung des in der Speichereinrichtung gespeicherten Erkennungswörterbuchs der Teilnehmernummern erkannt wird, und
wenn die Gebietskennzahlen, die Ortskennzahlen und die Teilnehmernummern aus der Spracheingabe des Benutzers in Reaktion auf die erste Nachricht erkannt werden (S14: Ja), die Spracherkennungsverarbeitung abgeschlossen wird, indem ein Erkennungsergebnis mitgeteilt wird (S21).

5. Audioerkennungsverfahren nach Anspruch 4, wobei:
wenn die Gebietskennzahlen und die Ortskennzahlen aus der Spracheingabe des Benutzers in Reaktion auf die zweite Nachricht erkannt werden, die Speichereinrichtung so eingestellt wird (S16), dass sie nur das Erkennungswörterbuch der Teilnehmernummem enthält, die dritte Nachricht ausgegeben wird (S17) und die in Reaktion auf die dritte Nachricht von dem Benutzer mittels Sprache eingegebene Folge von Zahlen unter Verwendung des in der Speichereinrichtung gespeicherten Wörterbuchs der Teilnehmernummern erkannt wird, und
wenn die Gebietskennzahlen, die Ortskennzahlen und die Teilnehmernummern der Reihe nach aus der Spracheingabe des Benutzers in Reaktion auf die zweite Nachricht erkannt werden (S14: Ja), die Spracherkennungsverarbeitung abgeschlossen wird, indem das Erkennungsergebnis mitgeteilt wird (S21).

6. Audioerkennungsverfahren nach Anspruch 4 oder Anspruch 5, wobei:
wenn die Gebietskennzahlen, die Ortskennzahlen und die Teilnehmernummern der Reihe nach durch die Spracheingabe des Benutzers in Reaktion auf die dritte Nachricht erkannt werden, die Spracherkennungsverarbeitung abgeschlossen wird, indem das Erkennungsergebnis mitgeteilt wird (S21).

## Revendications

1. Dispositif de reconnaissance audio adapté pour reconnaître, par l'intermédiaire de la voix, une séquence de chiffres représentant un numéro de téléphone constitué des chiffres de l'indicatif régional, des chiffres de l'indicatif de la ville, et des chiffres de l'abonné dans l'ordre, comprenant :
des moyens de sortie (12, 15) délivrant (S12) un premier message pour inciter l'utilisateur à entrer le numéro de téléphone au moyen de la voix de l'utilisateur ;
des moyens d'entrée (1, 2) recevant une entrée de la voix de l'utilisateur ; et
des moyens de reconnaissance vocale (4) pour reconnaître la séquence de chiffres entrés par la voix de l'utilisateur en réponse au premier message ;
**caractérisé par** des moyens de mémorisation (5) pour mémoriser un dictionnaire de reconnaissance (71) des chiffres de l'indicatif régional ; un dictionnaire de reconnaissance (74) des chiffres de l'indicatif de ville ; et un dictionnaire de reconnaissance (73) des chiffres de l'abonné ; les moyens de reconnaissance vocale utilisant les dictionnaires de reconnaissance mémorisés dans les moyens de mémorisation pour reconnaître les chiffres de la séquence ;
des moyens adaptés pour initialiser (S19) les moyens de mémorisation de sorte qu'ils ne contiennent que le dictionnaire de reconnaissance des chiffres de l'indicatif de ville et le dictionnaire de reconnaissance des chiffres de l'abonné, pour délivrer (S20), par l'intermédiaire des moyens de sortie, un deuxième message pour inciter l'utilisateur à entrer la partie du numéro de téléphone représentant les chiffres de l'indicatif de ville et les chiffres de l'abonné dans l'ordre par l'intermédiaire de la voix de l'utilisateur, et pour reconnaître, par l'intermédiaire des moyens de reconnaissance vocale, la séquence de chiffres entrés par la voix de l'utilisateur en réponse au deuxième message en utilisant les dictionnaires de reconnaissance mémorisés dans les moyens de mémorisation lorsque seuls les chiffres de l'indicatif régional de la séquence de chiffres sont reconnus (S15 : Non) à partir de la voix de l'utilisateur en réponse au premier message,
des moyens adaptés pour initialiser (S16) les moyens de mémorisation de sorte qu'ils ne contiennent que le dictionnaire de reconnaissance des chiffres de l'abonné, pour délivrer (S17), par l'intermédiaire des moyens de sortie, un troisième message pour inciter l'utilisateur à entrer la partie de numéro de l'abonné du numéro de téléphone par l'intermédiaire de la voix de l'utilisateur, et pour reconnaître, par l'intermédiaire des moyens de reconnaissance vocale, la séquence de chiffres entrés par la voix de l'utilisateur en réponse au troisième message en utilisant le dictionnaire de reconnaissance des chiffres de l'abonné mémorisé dans les moyens de mémorisation lorsque seuls les chiffres de l'indicatif régional et les chiffres de l'indicatif de ville sont reconnus (S15 : Oui) à partir de la voix de l'utilisateur en réponse au premier message, et
des moyens adaptés pour achever le traitement de reconnaissance vocale en informant (S21) d'un résultat de reconnaissance lorsque les chiffres de l'indicatif régional, les chiffres de l'indicatif de ville, et les chiffres de l'abonné sont reconnus (S14 : Oui) à partir de la voix de l'utilisateur en réponse au premier message.

2. Dispositif de reconnaissance audio selon la revendication 1, comprenant en outre :
des moyens adaptés pour initialiser (S16) les moyens de mémorisation de sorte qu'ils ne contiennent que le dictionnaire de reconnaissance des chiffres de l'abonné, pour délivrer (S17), par l'intermédiaire des moyens de sortie (12, 15), le troisième message, et pour reconnaître, par l'intermédiaire des moyens de reconnaissance vocale (4), la séquence de chiffres entrés par la voix de l'utilisateur en réponse au troisième message en utilisant le dictionnaire des chiffres de l'abonné mémorisé dans les moyens de mémorisation lorsque les chiffres de l'indicatif régional et les chiffres de l'indicatif de ville sont reconnus à partir de la voix de l'utilisateur en réponse au deuxième message, et
des moyens adaptés pour achever le traitement de reconnaissance vocale en informant (S21) du résultat de reconnaissance lorsque les chiffres de l'indicatif régional, les chiffres de l'indicatif de ville, et les chiffres de l'abonné dans l'ordre sont reconnus (S14 : Oui) à partir de la voix de l'utilisateur en réponse au deuxième message.

3. Dispositif de reconnaissance audio selon la revendication 1 ou la revendication 2, comprenant en outre :
des moyens adaptés pour achever le traitement de reconnaissance vocale en informant (S21) du résultat de reconnaissance lorsque les chiffres de l'indicatif régional, les chiffres de l'indicatif de ville, et les chiffres de l'abonné dans l'ordre sont reconnus par la voix de l'utilisateur en réponse au troisième message.

4. Procédé de reconnaissance audio pour reconnaître, par l'intermédiaire de la voix, une séquence de chiffres représentant un numéro de téléphone constitué des chiffres de l'indicatif régional, des chiffres de l'indicatif de ville, et des chiffres de l'abonné dans l'ordre, le procédé comprenant les étapes consistant à :
délivrer (S12) un premier message pour inciter l'utilisateur à entrer le numéro de téléphone par l'intermédiaire de la voix de l'utilisateur ;
entrer une entrée de la voix de l'utilisateur ; et
reconnaître la séquence de chiffres entrés par la voix de l'utilisateur en réponse au premier message ;
mémoriser, dans des moyens de mémorisation (5), un dictionnaire de reconnaissance (71) des chiffres de l'indicatif régional ; un dictionnaire de reconnaissance (74) des chiffres de l'indicatif de ville ; et un dictionnaire de reconnaissance (73) des chiffres de l'abonné ; et
utiliser les dictionnaires de reconnaissance mémorisés dans les moyens de mémorisation pour reconnaître les chiffres de la séquence ;
dans lequel, lorsque seuls les chiffres de l'indicatif régional de la séquence de chiffres sont reconnus (S15 : Non) à partir de la voix de l'utilisateur en réponse au premier message, les moyens de mémorisation sont initialisés (S19) de sorte qu'ils ne contiennent que le dictionnaire de reconnaissance des chiffres de l'indicatif de ville et le dictionnaire de reconnaissance des chiffres de l'abonné, un deuxième message est délivré (S20) pour inciter l'utilisateur à entrer la partie du numéro de téléphone représentant les chiffres de l'indicatif de ville et les chiffres de l'abonné, dans l'ordre, à partir de la voix de l'utilisateur, et la séquence de chiffres entrés par la voix de l'utilisateur en réponse au deuxième message est reconnue en utilisant les dictionnaires de reconnaissance mémorisés dans les moyens de mémorisation ; et
lorsque seuls les chiffres de l'indicatif régional et les chiffres de l'indicatif de ville sont reconnus (S15 : Oui) à partir de la voix de l'utilisateur en réponse au premier message, les moyens de mémorisation sont initialisés (S16) de sorte qu'ils ne contiennent que le dictionnaire de reconnaissance des chiffres de l'abonné, un troisième message est délivré (S17) pour inciter l'utilisateur à entrer une partie de numéro de l'abonné du numéro de téléphone par l'intermédiaire de la voix de l'utilisateur, et la séquence de chiffres entrés par la voix de l'utilisateur en réponse au troisième message est reconnue en utilisant le dictionnaire de reconnaissance des chiffres de l'abonné mémorisé dans les moyens de mémorisation, et
lorsque les chiffres de l'indicatif régional, les chiffres de l'indicatif de ville, et les chiffres de l'abonné sont reconnus (S14 : Oui) à partir de la voix de l'utilisateur en réponse au premier message, le traitement de reconnaissance vocale est achevé en informant (S21) d'un résultat de reconnaissance.

5. Procédé de reconnaissance audio selon la revendication 4, dans lequel :
lorsque les chiffres de l'indicatif régional et les chiffres de l'indicatif de ville sont reconnus à partir de la voix de l'utilisateur en réponse au deuxième message, les moyens de mémorisation sont initialisés (S16) de sorte qu'ils ne contiennent que le dictionnaire de reconnaissance des chiffres de l'abonné, le troisième message est délivré (S17), et la séquence de chiffres entrés par la voix de l'utilisateur en réponse au troisième message est reconnue en utilisant le dictionnaire des chiffres de l'abonné mémorisé dans les moyens de mémorisation, et
lorsque les chiffres de l'indicatif régional, les chiffres de l'indicatif de ville, et les chiffres de l'abonné dans l'ordre sont reconnus (S14 : Oui) à partir de la voix de l'utilisateur en réponse au deuxième message, le traitement de reconnaissance vocale est achevé en informant (S21) du résultat de reconnaissance.

6. Procédé de reconnaissance audio selon la revendication 4 ou la revendication 5, dans lequel :
lorsque les chiffres de l'indicatif régional, les chiffres de l'indicatif de ville, et les chiffres de l'abonné dans l'ordre sont reconnus par la voix de l'utilisateur en réponse au troisième message, le traitement de reconnaissance vocale est achevé en informant (S21) du résultat de reconnaissance.
